# EUROPEAN PATENT SPECIFICATION

(11) **EP 1 100 312 B1**
(45) Date of publication and mention of the grant of the patent: **24.09.2003**
(21) Application number: 99935262.8
(22) Date of filing: 15.07.1999
(51) Int. Cl.: A01J 5/013

(54) **A DEVICE FOR AND A METHOD OF DETECTING A DISEASE OF THE UDDER OF AN ANIMAL**
VORRICHTUNG UND VERFAHREN ZUR DETEKTION EINER KRANKHEIT DER ZITZEN EINES TIERES
DISPOSITIF ET PROCEDE PERMETTANT DE DETECTER L'INFECTION DU PIS D'UN ANIMAL

(30) Priority: 31.07.1998 SE 9802653
(43) Date of publication of application: 23.05.2001
(73) Proprietor: DeLaval Holding AB, 147 21 Tumba (SE)
(72) Inventor: NELSON, Lennart, S-270 35 Blentarp (SE); SJAUNJA, Lars, Ove, S-740 20 Vänge (SE)
(74) Representative: Berglund, Stefan
(86) International application number: SE9901276
(87) International publication number: WO00005943

(56) References cited:
- EP-A1- 0 657 098
- EP-A2- 0 385 539
- EP-A2- 0 534 564
- US-A- 4 064 838
- US-A- 4 574 736
- US-A- 5 016 569
- PATENT ABSTRACTS OF JAPAN & JP 05 317 343 A (KUBOTA CORP) 03 December 1993

## Description

### BACKGROUND OF THE INVENTION AND PRIOR ART

The present invention refers to a device for detecting a disease of the udder of an animal, comprising means for appreciating a parameter related to the quantity of milk extracted from a first teat and at least a second teat of said animal during at least one milking operation, means arranged to determine a deviation of said parameter of the first teat from a comparison value, and means arranged to display said deviation as an indication of an inflammation of the first teat in the case that said deviation exceeds a certain level. Moreover, the invention refers to a method of detecting a disease of the udder of an animal.

The present invention is concerned with udder inflammation of animals, i.e. mastitis, which may be caused by an infection of microorganisms, such as bacteria, but also be the result of a trauma or hormonal imbalances. In all milk production, mastitis constitutes a significant problem with respect to animal comfort, increased workload, reduced production capacity, etc.

In the past, different methods and devices have been proposed for identifying mastitis. Such methods and devices include, for instance, conductivity and temperature measurements on the milk extracted. Such measurements require a rather complicated equipment and the result thereof is still not very reliable. It is also known to identify mastitis by means of laboratory tests, which although reliable is rather inconvenient, since it might take many days before the result of such a test is received by the farmer.

Furthermore, it is known that one part of the udder of a cow, i.e. a quarter of the udder, may be inflamed by mastitis whereas the other quarters thereof are still healthy. Consequently, it is important to be able to identify any inflammation on an individual teat basis, i.e. for each quarter udder.

US-A-4 325 028 discloses one example of a device for measuring the conductivity of the milk from each individual teat in a milk conduit between the teatcup and the claw in order to identify mastitis. The measurement equipment comprises a receiving device, provided in each such milk conduit and having electrodes located therein, and an electronic evaluation device. The constructions of the receiving devices are not described more closely. The aim of the device disclosed is to enable the determination whether the conductivity value of the milk from an individual teat is abnormal and thus whether any udder part is inflamed.

EP-B-137 367 discloses a milking device comprising measurement equipment for detecting the milk flow from an individual teat. The value detected may be employed for determining when the milking from this teat is to be interrupted. The measurement equipment comprises two electrodes for each milk flow to be detected.

US-A-5 116 119 discloses an apparatus for measuring the milk flow through a flow channel. By means of electromagnetic radiation, the momentary volume and the momentary velocity of the milk flowing through the channel may be determined. Consequently, it is possible to determine the milk quantity of each milking operation.

JP-A-5 317 343 discloses a device for diagnosing mastitis. The quantity of milk from each udder part of a cow is measured during one milking operation. The relation between the milk quantity from each udder part and the total quantity is calculated. If the calculated relation deviates from the previously calculated relation by at least a pre-set value it is determined that the udder part in question is suffering from mastitis.

### SUMMARY OF THE INVENTION

The object of the present invention is to provide a device and a method for detecting a disease, in particular an inflammation, of an individual teat in a simple and reliable manner.

This object is obtained by the device initially defined and characterized in that the determining means is arranged to define said comparison value by including the level of said parameter regarding said second teat during the milking operation. It has appeared that a deviation in the quantity of milk produced by a teat in relation to a normal quantity may indicate mastitis in the udder and the particular teat from which the milk has been extracted. Consequently, by making use of this knowledge it is possible to detect mastitis in an easy and convenient manner and thereby take appropriate measures at an early stage to prevent the disease from infecting further udder parts or animals. It has been found that if the milk quantity of one udder part deviates from the milk quantity of an other udder part of one animal, there is high probability that the udder deviating is infected by mastitis. The quantity of milk from one udder normally forms a certain percentage of the total milk quantity from the udder. Any deviation, especially reduction, of said percentage may indicate mastitis in the actual teat or udder part. Moreover, the first teat and said second teat may form one of a rearward pair of teats of the udder or a forward pair of teats of the udder. The milk yield from corresponding udder parts, e.g. from the two rear udder parts, is normally essentially equal whereas the milk yield from the rear udder parts is normally greater than the milk yield from the forward udder parts. Trials have shown that the difference in milk yield from a healthy udder part and an inflamed corresponding udder part might be 23%. By comparing corresponding udder parts in this manner, no historical data regarding previous milking operations are necessary for the indication of mastitis. Moreover, normal variations in the milk yield need not be considered according to this embodiment. The comparison value may be based on one single second teat or on two or three second teats, for instance, forming an average value of the remaining second teats.

According to a further embodiment of the present invention, said comparison value includes the level of said parameter of at least one preceding milking operation of said animal. It is also possible to compare, for instance, the milk yield from different milking operations of one and the same teat or udder part. By collecting such historical data over a longer period of time, it is possible to determine a normal average parameter regarding the milk yield, which then may be included in the comparison value. Preferably, the determining means is arranged to consider the time interval between the milking operation and the immediately preceding milking operation of said animal for determining said deviation. For instance, in voluntary milking systems, the time interval between successive milking operations may vary. In order to obtain a comparable value of said parameter, it is advantageous to take account of this time interval.

According to a further embodiment of the present invention, said parameter includes the quantity of milk produced during said milking operation and the appreciating means comprises a milk measuring device. In such a manner, a milk meter or any other liquid measuring device, such as any kind of liquid flow meter, may be employed for each teat or udder part for determining said parameter.

According to a further embodiment of the present invention, said parameter includes the time duration of said milking operation and the appreciating means includes a time measuring device. It is appreciated that the duration of the milking operation of one teat or udder part reflects the quantity of milk obtained during this milking operation. Consequently, by comparing the time duration of, for instance, the milking operation of two corresponding udder parts or between two successive milking operations of one teat or udder part, it is possible in an easy and convenient manner to detect an inflammation of an udder part.

The above object is also obtained by the method initially defined and comprising the steps of:
appreciating a parameter related to the quantity of milk extracted from a first teat and at least a second teat of said animal during at least one milking operation,
defining a comparison value by including the level of said parameter regarding said second teat during said milking operation,
determining a deviation of said parameter of the first teat from said comparison value, and
indicating an inflammation of the first teat in the case that said deviation exceeds a certain level.

Advantageous embodiments of the method are defined in the dependent claims 9 to 14.

### BRIEF DESCRIPTION OF THE DRAWINGS

The present invention will now be described more closely by means of various embodiments and with reference to the accompanying drawings, in which
- Fig 1: shows a schematic view of a device according to the present invention, and
- Fig 2: shows a part of a device according to the present invention.

### DETAILED DESCRIPTION OF VARIOUS EMBODIMENTS OF THE PRESENT INVENTION

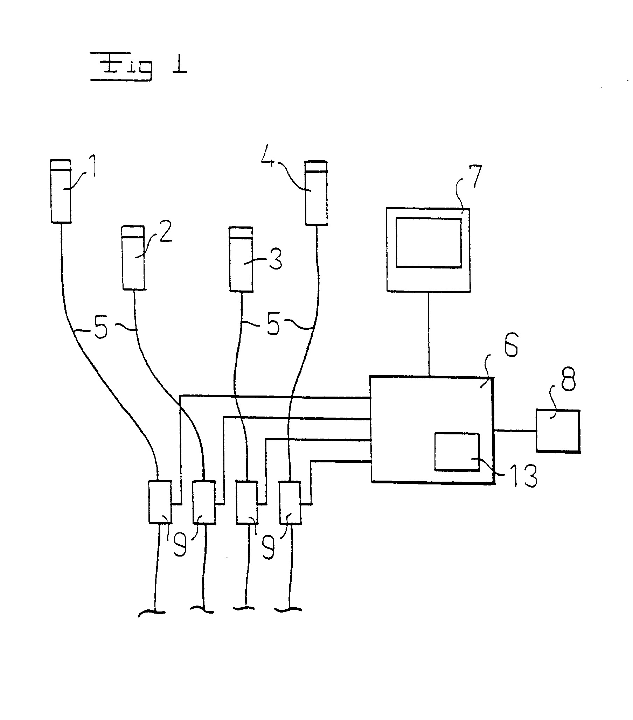

Fig 1 discloses a device for indicating mastitis in any of the teats or udder parts of an animal. The device according to the invention is connected to a milking machine, which may be of a conventional type and which is merely represented in the drawings by four teatcups 1, 2, 3 and 4 and four milk conduits 5 connecting each teatcup 1-4 to a milk-receiving member of the milking machine.

In the following it is referred to milking of a respective teat. However, by this expression is meant milking of a respective udder part, i.e. one of the two rear udder parts or one of the two front udder parts. As an example, the teatcups 1, 4 may be intended for milking of the front udder parts whereas the teatcups 2, 3 are intended for milking of the rear udder parts.

The device comprises a processing unit 6 provided to determine a deviation in a parameter related to the quantity of milk extracted from any of the four teats from a comparison value. The processing unit 6 is connected to or incorporates a display member 7. The display member 7 may be of a number of different types. For instance a screen, a number of indicating lamps or diodes, one for each teat, producing a light signal when a teat is inflamed, or any display disclosing the size of the deviation leaving to the farmer to conclude if the deviation indicates an inflammation or not. Furthermore, the processing unit 6 may be connected to or incorporate a time measuring unit 8 arranged to measure the duration of a milking operation of a teat and/or the time period between two successive milking operations of a teat.

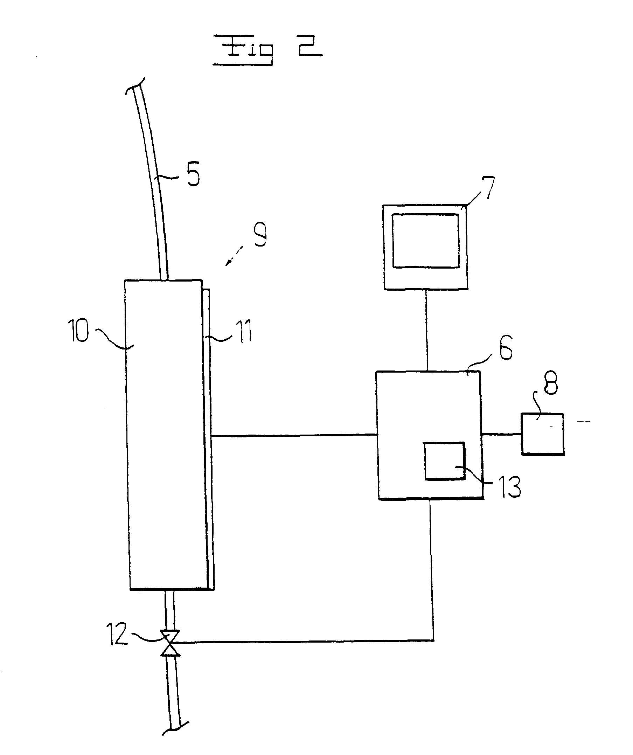

Furthermore, the device according to the invention comprises appreciating means 9, one for each teatcup 1-4. The construction and function of the appreciating means 9 may vary according to different embodiments of the present invention. Fig 2 discloses an appreciating means 9 in the form of a milk measuring device comprising a container 10 arranged to collect the milk produced during one milking operation. The milk measuring device comprises a sensor 11 arranged to sense the quantity of milk collected during the milking operation and transfer the sensed quantity to the processing unit 6. When the processing unit 6 has registered the milk quantity, a valve 12 is opened in order to convey the milk collected to the milk-receiving member of the milking machine. It is to be noted that also other types of milk measuring devices may be employed when realising the present invention, for instance the liquid measuring device disclosed in US-A-5 116 119.

The appreciating means 9 may also be realised by a device merely arranged to indicate whether there is a milk flow or not. Such a device is for instance disclosed in EP-B-137 367 mentioned above. Thereby the time measuring unit 8 may be arranged to measure the duration of the milking period, i.e. the time interval from the beginning of the milk flow through the conduit 5 until the end of the milk flow. It is appreciated that the duration of the milking operation reflects the quantity of milk produced during said milking operation, i.e. the interval appreciated forms said parameter.

According to an embodiment, the processing unit 6 is arranged to compare said parameter related to the quantity of milk from the two front teatcups 1, 4 or from the two rear teatcups 2, 3. In this case no time measuring unit 8 is necessary. Merely the fact that the quantity of milk form one of the front teats or the rear teats deviates from the other front teat and rear teat, respectively, is an indication that the actual teat may be inflamed by mastitis.

According to another embodiment, the processing unit 6 is arranged to compare said parameter between the actual milking operation and at least one previous milking operation. A deviation in quantity in the actual milking operation is an indication that the teat may be inflamed by mastitis. In this embodiment the processing unit 6 comprises a memory 13 arranged to store historical data regarding said parameter of one or more previous milking operations for each teat. Preferably, an average value of said parameter of a great number of previous milking operations may be calculated by means of the processing unit 6. This average value may then be stored in the memory 13 and included in said comparison value.

It is to be noted that the comparison value is based on the parameter of another teat during one milking operation but historical data from one or several preceding milking operations may also be considered, as a supplementary information, when defining the comparison value in order to reduce any source of error.

It is also possible to define said parameter as the quantity of milk produced during a determined period of time by one teat of an animal, for instance during 24 hours, or by the total duration of milking during a determined period of time, i.e. the total time period when milk is actually flowing from a teat during 24 hours.

The present invention is not limited to the embodiments described above but may be varied and modified within the scope of the following claims.

## Claims

1. A device for detecting a disease of the udder of an animal, comprising means (9) for appreciating a parameter related to the quantity of milk extracted from a first teat and at least a second teat of said animal during at least one milking operation, means (6) arranged to determine a deviation of said parameter of the first teat from a comparison value, and means (7) arranged to display said deviation as an indication of an inflammation of the first teat at least in the case that said deviation exceeds a certain level, **characterized in that** the determining means (6) is arranged to define said comparison value by including the level of said parameter regarding said second teat during said milking operation.

2. A device according to claim 1, **characterized in that** the first teat and said second teat form one of a rearward pair of teats of the udder or a forward pair of teats of the udder.

3. A device according to any one of the preceding claims, **characterized in that** said comparison value includes the level of said parameter of at least one preceding milking operation of said animal.

4. A device according to claim 3, **characterized in that** the determining means (6, 8) is arranged to consider the time interval between the milking operation and the immediately preceding milking operation of said animal for determining said deviation.

5. A device according to any one of the preceding claims, **characterized in that** said parameter includes the quantity of milk produced during said milking operation and that the appreciating means (9) includes a milk measuring device.

6. A device according to claim 5, **characterized in that** the milk measuring device (9) includes a flow meter.

7. A device according to any one of the preceding claims, **characterized in that** said parameter includes the time duration of said milking operation and that the appreciating means includes a time measuring device (8).

8. A method of detecting a disease of the udder of an animal, comprising the steps of:
appreciating a parameter related to the quantity of milk extracted from a first teat and at least a second teat of said animal during at least one milking operation,
defining a comparison value by the level of said parameter regarding said second teat during said milking operation,
determining a deviation of said parameter of the first teat from said comparison value, and
indicating an inflammation of the first teat at least in the case that said deviation exceeds a certain level.

9. A method according to claim 8, comprising the further step of:
displaying said deviation as an indication of an inflammation of the first teat in the case that said deviation exceeds a certain level.

10. A method according to any of claim 8 and 9, wherein the first said teat and said second teat form one of a rearward pair of teats of the udder or a forward pair of teats of the udder.

11. A method according to any one of claims 8 to 10, wherein said comparison value includes the level of said parameter of at least one preceding milking operation of said animal.

12. A method according to claim 11, comprising the step of: considering the time interval between said milking operation and the nearest preceding milking operation of said animal when determining said deviation.

13. A method according to any one of claims 8 to 12, wherein said appreciating step includes measuring the quantity of milk extracted from the actual teat during said milking operation.

14. A method according to any one of claims 8 to 13, wherein said appreciating step includes measuring the time duration of one milking operation of the actual teat.

## Patentansprüche

1. Vorrichtung zur Erfassung einer Krankheit des Euters eines Tieres, umfassend eine Einrichtung (9) zum Einschätzen eines Parameters, der auf die einer ersten und mindestens einer zweiten Zitze des Tieres entnommene Milchmenge bezogen ist, sowie eine Einrichtung (6), die zum Bestimmen einer Abweichung des Parameters der ersten Zitze von einem Vergleichswert dient, und eine Einrichtung (7), die zum Anzeigen dieser Abweichung als Indikator für eine Entzündung der ersten Zitze mindestens in dem Fall dient, dass die Abweichung einen bestimmten Wert übersteigt, **dadurch gekennzeichnet, dass** die Bestimmungseinrichtung (6) so eingerichtet ist, dass der Vergleichswert definiert wird, indem der Wert des Parameters, der sich auf die zweite Zitze während des Melkbetriebes bezieht, einbezogen wird.

2. Vorrichtung nach Anspruch 1, **dadurch gekennzeichnet, dass** die erste Zitze und die zweite Zitze entweder ein hinteres Zitzenpaar des Euters bilden oder ein vorderes Zitzenpaar des Euters.

3. Vorrichtung nach einem der vorangegangenen Ansprüche, **dadurch gekennzeichnet, dass** der Vergleichswert den Wert des Parameters umfasst, der von mindestens einem vorangegangenen Melkvorgang bei diesem Tier herrührt.

4. Vorrichtung nach Anspruch 3, **dadurch gekennzeichnet, dass** die Bestimmungseinrichtung (6, 8) so eingerichtet ist, dass das Zeitintervall zwischen dem Melkbetrieb und dem unmittelbar vorangegangenen Melkbetrieb des Tieres zur Bestimmung der Abweichung herangezogen wird.

5. Vorrichtung nach einem der vorangegangenen Ansprüche, **dadurch gekennzeichnet, dass** der Parameter die während des Melkbetriebes produzierte Milchmenge umfasst und dass die Einschätzeinrichtung (9) eine Milchmessvorrichtung umfasst.

6. Vorrichtung nach Anspruch 5, **dadurch gekennzeichnet, dass** die Milchmessvorrichtung (9) ein Durchflussmessgerät umfasst.

7. Vorrichtung nach einem der vorangegangenen Ansprüche, **dadurch gekennzeichnet, dass** der Parameter die Zeitdauer des Melkvorgangs umfasst und dass die Einschätzeinrichtung eine Zeitmessvorrichtung (8) umfasst.

8. Verfahren zum Erkennen einer Krankheit des Euters eines Tieres, umfassend die folgenden Schritte:
Einschätzen eines Parameters, der auf die von einer ersten Zitze und mindestens einer zweiten Zitze des Tieres während mindestens eines Melkvorgangs entnommene Milchmenge bezogen ist,
Definieren eines Vergleichswertes durch den Wert des Parameters, bezogen auf die zweite Zitze, während des Melkvorgangs,
Bestimmen einer Abweichung des Parameters der ersten Zitze vom Vergleichswert und
Anzeigen einer Entzündung der ersten Zitze zumindest für den Fall, dass die Abweichung einen bestimmten Wert übersteigt.

9. Verfahren nach Anspruch 8, umfassend den weiteren Schritt:
Anzeigen der Abweichung als Indikator für eine Entzündung der ersten Zitze für den Fall, dass die Abweichung einen bestimmten Wert überschreitet.

10. Verfahren nach einem der Ansprüche 8 und 9, wobei die erste Zitze und die zweite Zitze entweder ein hinteres Zitzenpaar des Euters bilden oder ein vorderes Zitzenpaar des Euters.

11. Verfahren nach einem der Ansprüche 8 bis 10, wobei der Vergleichswert den Wert des Parameters bei mindestens einem vorangegangenen Melkvorgang des Tieres umfasst.

12. Verfahren nach Anspruch 11, umfassend den Schritt:
Berücksichtigen des Zeitintervalls zwischen dem Melkvorgang und dem nächst vorangegangenen Melkvorgang bei diesem Tier, um die Abweichung zu bestimmen.

13. Verfahren nach einem der Ansprüche 8 bis 12, wobei der Einschätzungsschritt ein Messen der Milchmenge umfasst, die der betreffenden Zitze während des Melkvorgangs entnommen wurde.

14. Verfahren nach einem der Ansprüche 8 bis 13, wobei der Einschätzschritt ein Messen der Zeitdauer eines Melkvorgangs der betreffenden Zitze umfasst.

## Revendications

1. Dispositif pour détecter une maladie de la mamelle d'un animal comprenant un moyen (9) pour apprécier un paramètre lié à la quantité de lait extraite d'un premier trayon et au moins un second trayon dudit animal pendant au moins une opération de traite, un moyen (6) agencé pour déterminer un écart dudit paramètre du premier trayon par rapport à une valeur de comparaison, et un moyen (7) agencé pour afficher ledit écart comme une indication d'une inflammation du premier trayon au moins au cas où ledit écart dépasse un certain niveau, **caractérisé en ce que** le moyen de détermination (6) est agencé pour définir ladite valeur de comparaison en incluant le niveau dudit paramètre concernant ledit second trayon pendant ladite opération de traite.

2. Dispositif selon la revendication 1, **caractérisé en ce que** le premier trayon et ledit second trayon forment une paire de trayons arrière de la mamelle ou une paire de trayons avant de la mamelle.

3. Dispositif selon l'une des précédentes revendications, **caractérisé en ce que** ladite valeur de comparaison englobe le niveau dudit paramètre d'au moins une opération de traite précédente dudit animal.

4. Dispositif selon la revendication 3, **caractérisé en ce que** le moyen de détermination (6, 8) est agencé pour prendre en compte l'intervalle de temps entre l'opération de traite et l'opération de traite immédiatement précédente dudit animal pour déterminer ledit écart.

5. Dispositif selon l'une des précédentes revendications **caractérisé en ce que** ledit paramètre englobe la quantité de lait produite pendant ladite opération de traite et **en ce que** le moyen d'appréciation (9) englobe un dispositif de mesure du lait.

6. Dispositif selon la revendication 5, **caractérisé en ce que** le dispositif de mesure du lait (9) englobe un débitmètre.

7. Dispositif selon l'une des précédentes revendications, **caractérisé en ce que** ledit paramètre englobe la durée en temps de ladite opération de traite et **en ce que** le moyen d'appréciation englobe un dispositif de mesure du temps (8).

8. Procédé de détection d'une maladie de la mamelle d'un animal, comprenant les étapes de :
appréciation d'un paramètre lié à la quantité de lait extraite d'un premier trayon et au moins un second trayon dudit animal pendant au moins une opération de traite,
définition d'une valeur de comparaison par le niveau dudit paramètre concernant ledit second trayon pendant ladite opération de traite,
détermination d'un écart dudit paramètre du premier trayon par rapport à ladite valeur de comparaison, et
indication d'une inflammation du premier trayon au moins au cas où cet écart dépasse un certain niveau.

9. Procédé selon la revendication 8, comprenant l'étape ultérieure de :
affichage dudit écart comme une indication d'une inflammation du premier trayon au cas où ledit écart dépasse un certain niveau.

10. Procédé selon l'une des revendications 8 et 9, **caractérisé en ce que** ledit premier trayon et ledit second trayon forment une paire de trayons arrière de la mamelle ou une paire de trayons avant de la mamelle.

11. Procédé selon l'une des revendications 8 à 10, **caractérisé en ce que** ladite valeur de comparaison englobe le niveau dudit paramètre d'au moins une opération de traite précédente dudit animal.

12. Procédé selon la revendication 11, comprenant l'étape de :
prise en compte de l'intervalle de temps entre ladite opération de traite et l'opération de traite précédente la plus proche dudit animal lors de la détermination dudit écart.

13. Procédé selon l'une des revendications 8 à 12, **caractérisé en ce que** ladite étape d'appréciation englobe la mesure de la quantité de lait extraite du présent trayon pendant ladite opération de traite.

14. Procédé selon l'une des revendications 8 à 13, **caractérisé en ce que** ladite étape d'appréciation englobe la mesure de la durée en temps d'une opération de traite du présent trayon.
